# EUROPEAN PATENT APPLICATION

(11) **EP 1 612 987 A1**
(43) Date of publication of application: **04.01.2006**
(21) Application number: 04717865.2
(22) Date of filing: 05.03.2004
(51) Int. Cl.: H04L 9/08, G11B 20/10

(54) **CONTENT RECORDING DEVICE CAPABLE OF PREVENTING UNAUTHORIZED USE OF CONTENT**

(30) Priority: 13.03.2003 JP 2003068470
(71) Applicant: SHARP KABUSHIKI KAISHA, Osaka 545-8522 (JP)
(72) Inventor: SATO, Katsuhiko, Soraku-gun, Kyoto 619-0232 (JP); NAKO, Kazuyuki, Soraku-gun, Kyoto 6190237 (JP); SAWADA, Yuji, Nara-shi, Nara 6308303 (JP)
(74) Representative: Müller - Hoffmann & Partner
(86) International application number: PCT/JP2004/002910
(87) International publication number: WO 2004/082202

(57) **Abstract**

A content recording apparatus reads from a medium (310) a medium identifier Mid unique to a medium recording content Co (S103) and employs identifier Cid unique to content Co to generate an individualization key Km (S105). Furthermore, the apparatus encrypts a content key Kc, which has been used to encrypt content Co, with individualization key Km to generate an individualized content key (S107) and stores content identifier Cid and the individualized content key together with encrypted content to medium (310) (S109). A content utilization apparatus encrypts content identifier Cid by medium identifier Mid to generate individualization key Km (S135) and decrypts the individualized content key to obtain content key Kc (S139) and decrypt the encrypted content (S143).

## Description

### Technical Field

The present invention relates generally to content recording apparatuses, content utilization apparatuses, content recording methods, content utilization methods, content recording program products, and content utilizing program products, and particularly to those capable of preventing improper use of contents.

### Background Art

A conventionally existing apparatus allows a user to purchase a content recorded compact disk-read only memory (CD-ROM), a digital video disk (DVD) or similar recording medium, download content to a recording medium from a terminal installed for example in a station and/or download content from a server to obtain and reproduce the content or the like to utilize music, images, video, electronic books and/or the like's content data. Such apparatus includes mobile information terminals, mobile phones, mobile players, computers having programs, devices and the like for reproduction, and the like.

Furthermore, some of such content utilization apparatuses have a slot, a connector and/or the like capable of connecting an external memory device so that content data stored in the apparatus at a memory device can be moved and/or copied to the external memory device and content data stored in the external memory device can also be moved and/or copied to the apparatus and stored in its internal memory device.

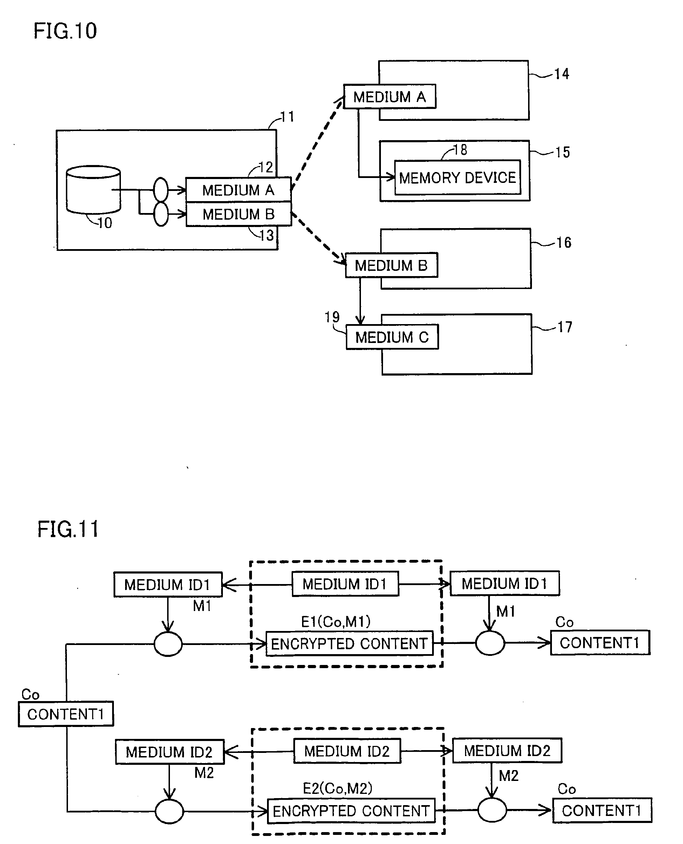

In that case, however, the copied content data would also freely be reproduced by any content utilization apparatus. This often involves issues associated with the content's copyright. Accordingly, if content data is moved and/or copied from a memory device to a different memory device, an approach can be taken to prevent improper use of the data, as follows: for example an ID of the recording medium used can be utilized to previously correlate content data and the ID, and in use the recording medium's ID or the like can be utilized to check its correlation with the content data. When data is moved and/or copied to a different memory device, which has a different ID, the content correlated with the original ID would not be reproduced. A specific example of such method will be described hereinafter with reference to Fig. 10.

With reference to Fig. 10, a content recording apparatus 11 including a content server 10 having content stored therein, receives a request to distribute content stored in content server 10. This request may be made by a method determined by a content distributor or a method desired by a user. Furthermore, content server 10 may be external to recording apparatus 11 and connected thereto. Content recording apparatus 11 having received the request obtains the requested, particular content from content server 10 and records the content to an external recording device provided in the form of a medium A (12), medium B (13) and/or the like.

Furthermore, medium A (12) and medium B (13) have their respective, unique, unrewritable IDs. Content recording apparatus 11 obtains particular content from content server 10 and correlates it with the media-unique IDs and stores it to each of medium A (12) and medium B (13). In this specific example, the content is correlated with the media by encrypting the content by the media' unique IDs for the sake of illustration.

The content distributor distributes media A (12) and B (13) to a user. The user employs a content utilization apparatus to reproduce the content stored in media A (12) and B (13).

The content utilization apparatus can be a dedicated apparatus or may have its function(s) implemented by software incorporated in a general purpose computer. Furthermore, the content utilization apparatus is equipped with an input device used to obtain data from a medium. The input device is adapted to be capable of obtaining data from a medium inserted therein.

Now, as shown in Fig. 10, medium A (12) is connected to an input device (not shown) of a content utilization apparatus 14 for the sake of illustration. Content utilization apparatus 14 with medium A (12) attached thereto can read the content data stored in medium A (12) and the medium's unique ID and use the ID to decrypt the content data to reproduce the data. Similarly, a content utilization apparatus 16 with medium B (13) attached thereto can read content data and the medium's unique ID and reproduce the content.

Fig. 10 also shows a content utilization apparatus 15, for which medium A (12) is inserted into an input device to temporarily store content data in content utilization apparatus 15 at an internal memory 18. Note that memory device 18 stores the content data remaining encrypted. Content utilization apparatus 15 has medium A (12) ejected from its input device and thereafter if the content data stored in memory device 18 is to be reproduced the content data cannot be decrypted as the data is encrypted by the medium A (12) unique ID, and the ID cannot be obtained.

Furthermore, Fig. 10 also shows a content utilization apparatus 17, which copies the content data stored in medium B (13) to a medium C (19), and medium C (19) is inserted into the input device for reproduction for the sake of illustration. However, the content data stored in medium C (19) cannot be reproduced, since the data is encrypted by the medium B (13) unique ID, and content utilization apparatus 17 cannot obtain the ID and as a result cannot decrypt the data for reproduction.

A method adopting such configuration to prevent content from being copied has conventionally been proposed as disclosed for example in Japanese Patent Laying-Open No. 2000-243026.

As described above, an ID and content may be correlated through encryption. For example, if a recording medium or a similar external storage medium is provided with an ID, and content data is written to the medium, the medium's ID is utilized to encrypt the content data and when the content data is read from the medium the medium's ID is utilized to decrypt the content data.

The above described encryption and decryption processes are effected external to the external storage device. Typically, a dedicated reader, writer and the like are used and for example a mobile player or the like has this decryption function incorporated therein.

In that case, if an external storage device having encrypted content written therein is used, any reproduction apparatus having decryption function incorporated therein will be able to reproduce content data written in that external storage medium. However, if the encrypted content data stored in the external storage medium is copied to a different external storage medium, the external storage media have different IDs, respectively, and the copied content data in the latter external storage medium cannot accurately be decrypted for reproduction.

Conventionally correlating an ID and content, as described above, however, has a first problem, as will be described hereinafter with reference to Fig. 11.

Fig. 11 shows a flow of a process performed when a content storage apparatus employs a unique ID to encrypt content and a content utilization apparatus decrypts the content. In the figure, an arrow indicates how data flows, and a circle indicates an encryption or decryption process.

With reference to Fig. 11, the content storage apparatus employs a medium unique ID to encrypt content Co. More specifically, if the content is stored to a medium 1 (medium ID: M1), the content storage apparatus employs medium ID (M1) as a key to encrypt content Co and calculates encrypted content E1 (Co, M1), which indicates that it is content data obtained by encrypting data (content) Co with data (medium ID) M1 as an encryption key in an encryption system E1.

Furthermore, the content utilization apparatus reads encrypted content E1 (Co, M1) from medium 1 and uses medium ID (M1) as a decryption key to decrypt the encrypted content to obtain content Co.

Furthermore, if content Co is stored to a medium 2 (medium ID: M2), the content storage apparatus performs the above described encryption process similarly as has done in storing the content to medium 1 (medium ID: M1) and calculates encrypted content E1 (Co, M2). Similarly, whenever content is stored to a medium, the content storage apparatus employs the medium's medium ID to encrypt the content. More specifically, when a content recording apparatus adopting such a conventional method as indicated in Japanese Patent Laying-Open No. 2000-243026 stores content to a storage medium, the apparatus must encrypt the content for each storage medium. In general, contents have large data sizes. If large amounts of data are distributed the period of time required for the process is ineligible.

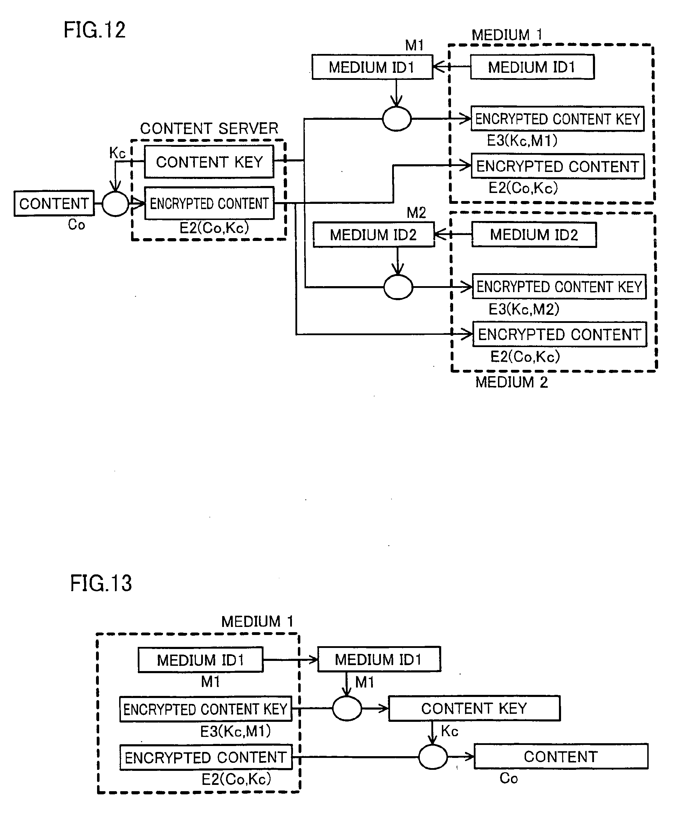

To address the first problem, content can be encrypted with a common key encrypted by a medium unique ID and distributed, as will be described hereinafter with reference to Figs. 12 and 13.

With reference to Fig. 12, content (Co) has previously been encrypted with a content key (Kc) corresponding to the content to calculate encrypted content E2 (Co, Kc), and a content server has stored therein content key Kc and encrypted content E2 (Co, Kc) correlated with each other.

Content key Kc may be determined by a content creator, as desired. Typically, it is data of a size significantly smaller than that of the data of content Co. When the content recording apparatus records content to medium 1, the apparatus obtains the medium 1 unique ID (M1) and uses it to encrypt content key Kc. Furthermore, when the apparatus records content key Kc, the apparatus calculates an encrypted content key E3 (Kc, M1). Furthermore, when the apparatus records content to medium 2 (medium ID: M2), the apparatus employs the medium 2 unique ID (M2) to encrypt content key Kc and furthermore, obtains encrypted content E3 (Ac, M2).

Medium 1 is reproduced by the content utilization apparatus in a process as shown in Fig. 13. More specifically, with reference to the figure, the content utilization apparatus obtains from medium 1 the medium 1 unique ID (M1) and encrypted content key E3 (Kc, M1) and uses the ID (M1) to decrypt encrypted content key E3 (Kc, M1). Content key Kc can thus be obtained. Furthermore, the apparatus obtains encrypted content E2 (Co, Kc) from medium 1 and employs content key Kc to decrypt encrypted content E2 (Co, Kc). Content Co can thus be obtained and reproduced.

The above described method allows the content recording apparatus to encrypt only content key Kc having a small data size. A period of time required to encrypt content Co having a large data size is no longer required, and the above described first problem can be overcome.

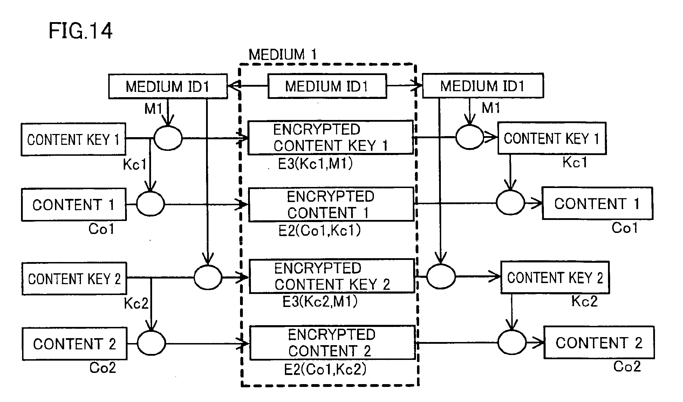

This system, however, has a second problem, as described hereinafter with reference to Fig. 14.

Fig. 14 shows that the same method as described in Figs. 12 and 13 is employed to allow a content recording apparatus to record a plurality of contents to media and a content utilization apparatus to reproduce contents, as conventional, by way of example.

With reference to Fig. 14, a method similar to that previously described is employed to previously encrypt content 1 (Co1) with a content key 1 (Kc1) and store the encrypted content to a content server. The content recording apparatus records to medium 1 encrypted content 1E2 (Co1, Kc1) recorded in the content server. Furthermore, the apparatus obtains the medium 1 unique ID (M1) and uses it to encrypt content key Kc1 to calculate and record an encrypted content key 1E3 (Kc1, M1) to medium.

If content 2 is recorded to medium 1 a similar procedure is followed: a content key 2 (Kc2) is employed to encrypt content 2 to obtain encrypted content 2E2 (Co2, Kc2), and content key Kc2 is encrypted with the medium 1 unique ID (M1) and thus calculated to obtain an encrypted content key 2E3 (Kc2, M1). The encrypted content and content key 2E2 (Co2, Kc2) and 2E3 (Kc2, M1) are recorded to medium 1.

If the content utilization apparatus reproduces content 1 stored in medium 1, the apparatus obtains from medium 1 the medium's unique ID (M1) and encrypted content key IE3 (Kc1, M1) and employs the key to decrypt the ID (M1) to obtain content key Kc1. Furthermore, the apparatus obtains encrypted content E2 (Co1, Kc1) from medium 1 and decrypts the obtained content with content key Kc1 to obtain content Co 1 for reproduction.

Thus if a medium-unique ID is employed to encrypt a content key, identical storage media 1 will have encrypted content keys recorded therein, respectively, all provided through encryption with a single key, i.e., medium ID (M1). Furthermore, encryption system E3 as employed herein is not necessarily limited to a private system and can employ a publicly known method. As such, if medium ID (M1) is leaked, there is a possibility that the encrypted content keys stored in identical storage media 1 can all be decrypted. Furthermore, a medium-unique ID is not necessarily protected safely and can be analyzed. In other words, if encryption system E3 is a known system, there is a possibility that a content key can improperly be obtained.

The present invention has been made to overcome such disadvantages and it contemplates a content recording apparatus, content utilization apparatus, content recording method, content utilization method, content recording program product, and content utilization program product that can effectively prevent improper use of contents.

### Disclosure of the Invention

To achieve the above object the present invention in one aspect provides a content recording apparatus including: an identifier acquirer obtaining from a storage medium an unrewritable identifier unique to the storage medium; an individualization key generator generating an individualization key from the identifier unique to the storage medium and a content identifier unique to content; an encrypted-content key generator employing the individualization key to encrypt a content key to generate an encrypted content key, the content key having been used to encrypt the content; and a data recorder recording content at least partially encrypted with the content key, the content identifier, and the content key to the storage medium.

The present invention in another aspect provides a content recording apparatus including: an encrypted-content key generator encrypting a content key, having been used to encrypt content, by a content identifier unique to the content to generate an encrypted content key; a data coupler coupling the encrypted content key and the content identifier together to generate coupled data; an identifier acquirer obtaining from a storage medium an unrewritable identifier unique to the storage medium; and an encrypted, coupled data generator encrypting the coupled data by an identifier unique to the storage medium.

The present invention in still another aspect provides a content utilization apparatus including: a data acquirer obtaining from a storage medium encrypted content recorded in the storage medium, a content identifier unique the content, and a content key employed to encrypt the content and encrypted; an identifier acquirer obtaining from the storage medium an unrewritable identifier unique to the storage medium; an individualization key generator generating an individualization key from the identifier unique to the storage medium and the content identifier; an encrypted-content key decrypter decrypting the encrypted content key with the individualization key; and a content decrypter decrypting the encrypted content with the content key decrypted.

The present invention in still another aspect provides a content utilization apparatus including: a data acquirer obtaining from a storage medium encrypted content recorded in the storage medium and encrypted coupled data formed of a content key having been used to encrypt the content and encrypted and a content identifier unique to the content; an identifier acquirer obtaining from the storage medium an unrewritable identifier unique to the storage medium; a coupled-data acquirer employing the identifier unique to the storage medium to decrypt the encrypted coupled data to generate coupled data; a data separator obtaining the content key encrypted and the content identifier from the coupled data generated; an encrypted-content key decrypter decrypting the encrypted content key by the content identifier; and a content decrypter employing the decrypted content key to decrypt the encrypted content.

The present invention in still another aspect provides a method of recording content to a storage medium having an unrewritable, unique identifier, including the steps of: obtaining the identifier from the storage medium; generating an individualization key from the identifier unique to the storage medium and a content identifier unique to the content; encrypting a content key, having been used to encrypt the content, with the individualization key to generate an encrypted content key; and recording to the storage medium content at least partially encrypted with the content key, the content identifier, and the encrypted content key.

The present invention in still another aspect provides a method of recording content to a storage medium having an unrewritable, unique identifier, including the steps of: encrypting a content key, having been used to encrypt the content, by a content identifier unique to the content to generate an encrypted content key; coupling the encrypted content key and the content identifier together to generate coupled data; obtaining an identifier unique to the storage medium from the storage medium; and encrypting the coupled data by the identifier unique to the storage medium.

The present invention in still another aspect provides a method of utilizing content recorded in a storage medium having an unrewritable, unique identifier, including the steps of: obtaining from the storage medium encrypted content recorded in the storage medium, a content identifier unique the content, and a content key employed to encrypt the content and encrypted; obtaining an identifier unique to the storage medium from the storage medium; generating an individualization key from the identifier unique to the storage medium and the content identifier; decrypting the encrypted content key with the individualization key; and decrypting the encrypted content with the content key decrypted.

The present invention in still another aspect provides a method of utilizing content recorded in a storage medium having an unrewritable, unique identifier, including the steps of: obtaining from a storage medium encrypted content recorded in the storage medium and encrypted coupled data formed of a content key having been used to encrypt the content and encrypted and a content identifier unique to the content; obtaining an identifier unique to the storage medium from the storage medium; employing the identifier unique to the storage medium to decrypt the encrypted coupled data to generate coupled data; obtaining the content key encrypted and the content identifier from the coupled data generated; decrypting the encrypted content key by the content identifier; and employing the decrypted content key to decrypt the encrypted content.

The present invention in still another aspect provides a program product causing a computer to execute a method of recording content to a storage medium having an unrewritable, unique identifier, the method including the steps of: obtaining the identifier from the storage medium; generating an individualization key from the identifier unique to the storage medium and a content identifier unique to the content; encrypting a content key, having been used to encrypt the content, with the individualization key to generate an encrypted content key; and recording to the storage medium content at least partially encrypted with the content key, the content identifier, and the encrypted content key.

The present invention in still another aspect provides a program product causing a computer to execute a method of recording content to a storage medium having an unrewritable, unique identifier, the method including the steps of: encrypting a content key, having been used to encrypt the content, by a content identifier unique to the content to generate an encrypted content key; coupling the encrypted content key and the content identifier together to generate coupled data; obtaining an identifier unique to the storage medium from the storage medium; and encrypting the coupled data by the identifier unique to the storage medium.

The present invention in still another aspect provides a program product causing a computer to execute a method of recording content to a storage medium having an unrewritable, unique identifier, the method including the steps of: obtaining from the storage medium encrypted content recorded in the storage medium, a content identifier unique the content, and a content key employed to encrypt the content and encrypted; obtaining an identifier unique to the storage medium from the storage medium; generating an individualization key from the identifier unique to the storage medium and the content identifier; decrypting the encrypted content key with the individualization key; and decrypting the encrypted content with the content key decrypted.

The present invention in still another aspect provides a program product causing a computer to execute a method of recording content to a storage medium having an unrewritable, unique identifier, the method including the steps of: obtaining from a storage medium encrypted content recorded in the storage medium and encrypted coupled data formed of a content key having been used to encrypt the content and encrypted and a content identifier unique to the content; obtaining an identifier unique to the storage medium from the storage medium; employing the identifier unique to the storage medium to decrypt the encrypted coupled data to generate coupled data; obtaining the content key encrypted and the content identifier from the coupled data generated; decrypting the encrypted content key by the content identifier; and employing the decrypted content key to decrypt the encrypted content.

### Brief Description of the Drawings

Figs. 1A and 1B are block diagrams showing specific examples of configurations of a content recording apparatus 301 and a content utilization apparatus 314, respectively, in a first embodiment of the present invention.
Fig. 2 shows content recording apparatus 301 in another form as a specific example.
Fig. 3 is a block diagram showing a specific example of a hardware configuration of content utilization apparatus 314.
Fig. 4 shows a specific example of an external appearance of data utilization apparatus 314.
Fig. 5 shows how data flows when in the first embodiment content recording apparatus 301 and content utilization apparatus 314 perform encryption and encryption processes.
Figs. 6A and 6B are block diagrams showing specific examples of configurations of a content recording apparatus 500 and a content utilization apparatus 506, respectively, in a second embodiment of the present invention.
Figs. 7A and 7B represent a specific example of data before and after the data are coupled, respectively.
Fig. 8 shows how data flows in the second embodiment when content recording apparatus 500 performs an encryption process.
Fig. 9 shows how data flow in the second embodiment when content utilization apparatus 506 performs a decryption process.
Fig. 10 shows a specific example of a conventional method of preventing content from being improperly used.
Fig. 11 shows how data flows when a conventional content recording apparatus and content utilization apparatus perform a content encryption and decryption process.
Fig. 12 shows how data flows when a conventional content recording apparatus performs an encryption process.
Fig. 13 shows how data flows when a conventional content utilization apparatus performs a decryption process.
Fig. 14 shows how data flows when a conventional content recording apparatus and content utilization apparatus perform a content encryption and decryption process.

### Best Modes for Carrying Out the Invention

Hereinafter reference will be made to the drawings to describe the present invention in embodiments. In the following description, identical parts and components are identically denoted. They are also identical in name and function.

### First Embodiment

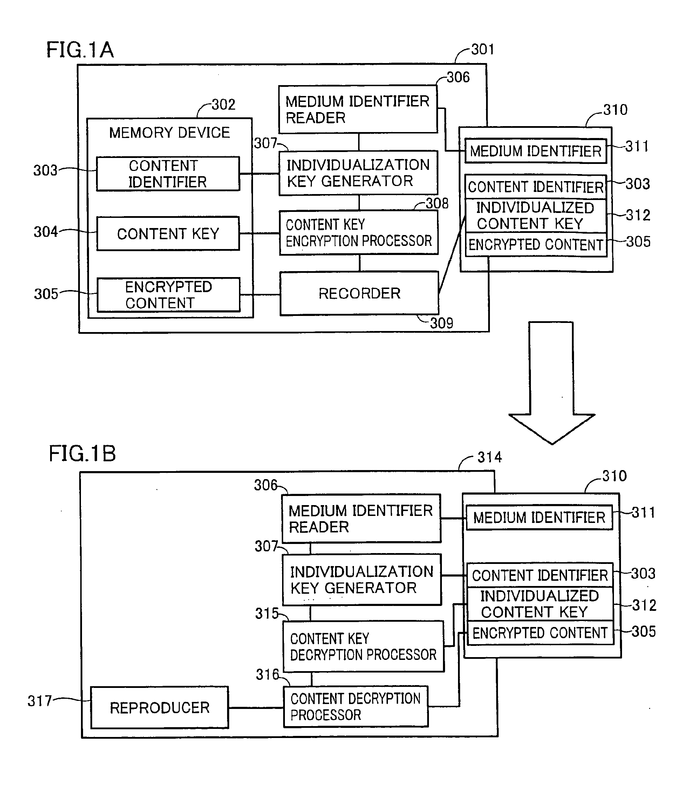

Figs. 1A and 1B are block diagrams showing specific examples of configurations of a content recording apparatus 301 and a content utilization apparatus 314, respectively, in a first embodiment of the present invention to prevent improper use of contents. In the present embodiment content recording apparatus 301 records content stored in a recording device 302 to a detachably attachable recording medium 310, and Figs. 1A and 1B show that content recorded in recording medium 310 is utilized in content utilization apparatus 314.

It should be noted that the terms "record(s)", "recording", "recorded" and the like as used herein indicate a process writing data to a recording medium, and for example includes a process moving and copying the data to outside the content recording apparatus (e. g., to a networked apparatus, an external memory device, and the like).

Furthermore, the term "utilization" as used herein indicates a process reading and writing data and for example includes referencing, reproducing and executing data, and moving and copying data to outside the content utilization apparatus (e. g., to a networked apparatus, an external memory device, and the like).

Furthermore, the term "detachably attachable" as used herein indicates that the data utilization equipment and ID information equipment can physically be integrated together and separated. Basically, being attached or detached is determined by whether ID information can be read or not.

Initially with reference to Fig. 1A the first embodiment provides content recording apparatus 301 having a configuration as will specifically be described hereinafter. With reference to the figure, content recording apparatus 301 includes a memory device 302, a medium identifier reader 306, an individualization key generator 307, a content key encryption processor 308, and a recorder 309.

Content recording apparatus 301 assumes management of content each encrypted with a content key 304 determined for the content, and memory device 302 stores a content identifier 303 used to identify content, content key 304, and encrypted content 305 as a set.

Note that content recording apparatus 301 assumes management of content, which can be any types of data. Such data are mainly data to be protected from improper use, i.e., copyrighted or similar data, charged data, and the like. For example, it corresponds to music, images, motion pictures, electronic books and the like's data or programs executable in the content utilization apparatus.

Note that the term "encryption" as referred to herein indicates a process converting unencrypted normal data (plaintext) in accordance with a prescribed rule to data (or encrypted text) which is not understandable in the converted form by third parties. Furthermore, there exists a description process that can recover original plaintext from encrypted text by a prescribed rule, which is not required to be identical to the initially applied rule. Furthermore, generally in conversion a "key" is used to effect an encryption process to avoid always encrypting identical plaintext into identically encrypted text. Furthermore, there also exists common key cryptography allowing a decryption process to be performed with the same "key" to provide decryption, and public key cryptography allowing a determined pair of keys to be used to perform encryption and decryption processes.

Common key cryptography includes data encryption standard (DES), advanced encryption standard (AES) and the like. Public key cryptography includes RSA cryptography, Elgama cryptography, and the like. In the present invention any of these key systems may be used. In the following description, common key cryptography is employed for the sake of description.

Content key 304 is any data that can be utilized in an encryption system, and one piece of the data is assigned whenever encryption is effected. For example, for a 64-bit key DES system, content key 304 will be data of a length of 64 bits. It should be noted, however, that content key 304 may also be data that can undergo a determined conversion process to calculate a key used in an encryption system. Encrypted content 305 is content generated by using content key 304. Encrypted content 305 is not required to be entirely encrypted. A level of encryption that cannot be used in content utilization apparatus 314 without content key 304, suffices. More specifically, it suffices if only a portion of the content that is data important in utilizing the content (e.g., a header portion including information indicating the type of the content, or the like) can be encrypted to provide the same effect as encrypting the entire content. "Encryption" may be effected by employing an encryption chip or similar hardware, or software.

Content identifier 303 is data used to identify content. It is data determined by a content creator in creating content and can determine the content uniquely. Content identifier 303 may be such types of data as a character string, a numeral, binary data and the like and may be any type of data that allows content to be uniquely determined. Furthermore, it may not be determined by a content creator; it may automatically be determined for example by the time at which the content is created. Furthermore, while as shown in Fig. 1A content identifier 303 is not included in encrypted content 305, content identifier 303 may be embedded in encrypted content 305 at an unencrypted region.

Furthermore, content recording apparatus 301 also includes an interface or similar device (not shown) connected to an external memory device (hereinafter referred to as a "medium") 310 to communicate data with medium 310.

Medium 310 may be any storage medium. It corresponds for example to a flexible disk (FD), a compact disk (CD), a CD-recordable (CD-R), a digital video disk (DVD), a mini disk (MD), compact flash (R), smart media (R), multi-media card (R), and similar memory cards, and detachably attachable hard disk, and the like.

Furthermore, medium 310 and content recording apparatus 301 are connected for example by inserting medium 310 into content recording apparatus 301 to incorporate the former in the later to physically connect them together, or employing a communication means to perform communication to communicatively connect medium 310 such that it is independent from content recording apparatus 301. Note that as long as data can be read from medium 310 and medium 310 is detachably attachable, medium 310 and content recording apparatus 301 may be connected in a manner different than described above, for example by employing a terminal, a cable or the like, i.e., contact type connection, or by wireless, electromagnetic wave or the like, i.e., contactless type connection.

Furthermore, medium 310 previously includes a region for recording an unrewritable medium identifier 311, which is information indicating an identity of medium 310 and typically includes a unique value, character string or similar data. In general, medium identifier 311 is created in production and there does not exist any other medium that has the same identifier. Note that although it is not guaranteed that medium identifier 311 is not identical to a different medium's medium identifier, the different medium may be regarded as not having recorded therein the same medium identifier 311 as medium 310 if there is only a significantly limited possibility that media identifiers are identical and such possibility is thus practically, substantially negligible. More specifically, a different medium may be regarded as not having recorded therein the same medium identifier 311 as medium 310 for example when media identifiers are not intensively subjected to management and medium identifier 311 is individually, dynamically generated on each media 310.

Medium identifier reader 306 reads medium identifier 311 recorded in medium 310. Note that reading medium identifier 311 may require an authentication process or some communication procedure between content recording apparatus 301 and medium 310. Furthermore, medium identifier 311 may be encrypted and need to be decrypted on content recording apparatus 301.

Note that rather than exactly using in content recording apparatus 301 medium identifier 311 obtained from medium 310, using medium identifier 311 obtained from medium 310 to generate therefrom another identifier information and use a generated identifier is also regarded as equivalent to using medium identifier 311 included in medium 310. Medium identifier 311 obtained from medium 310 is used to generate another identifier for example by subjecting the medium 310 medium identifier 311 to hash function or similar arithmetic process. Furthermore, the identifier may be generated for example by external equipment, rather than internal to content recording apparatus 301. For example, content recording apparatus 301 may transmit medium identifier 311 to an external server, which generates a new identifier to be obtained.

Medium identifier reader 306 reads and passes medium identifier 311 to individualization key generator 307.

Individualization key generator 307 uses content identifier 303 recorded in memory device 302 and medium identifier 311 received from medium identifier reader 3 06 to generate an individualization key, which is data calculated from content identifier 303 and medium identifier 311 by a prescribed method. For example, it may be data obtained by encrypting content identifier 303 with medium identifier 311 serving as a key. Individualization key generator 307 passes a thus generated individualization key to content key encryption processor 308.

Content key encryption processor 308 employs the individualization key generated by individualization key generator 307 to encrypt content key 304 recorded in memory device 302 to generate and pass an individualized content key 312 to recorder 309.

Recorder 309 stores to medium 310 content identifier 303 and encrypted content 305 stored in recording apparatus 302 and individualized content key 312 passed from content key encryption processor 308.

In the present embodiment content recording apparatus 301, as described above, stores created, encrypted content 305 in memory device 302 and when encrypted content 305 is recorded to medium 310 the content is recorded as it is. In general, a data encryption process requires a longer period of time as data to be encrypted has a larger size. Furthermore, in general, content is more than a content identifier, a content key and the like's data size. In the present embodiment when content recording apparatus 301 records identical content to a plurality of media, it is not required to encrypt the content time and again, as has been described with reference to a conventional example, to record it, which can save time. Furthermore, although content key 304 is, as described above, encrypted in content key encryption processor 308 whenever it is recorded to medium 310, content key 304 has a data size smaller for example than that of content and can be encrypted in a negligible period of time. Thus in the present embodiment content recording apparatus 301 can record content to medium 310 in a significantly reduced period of time.

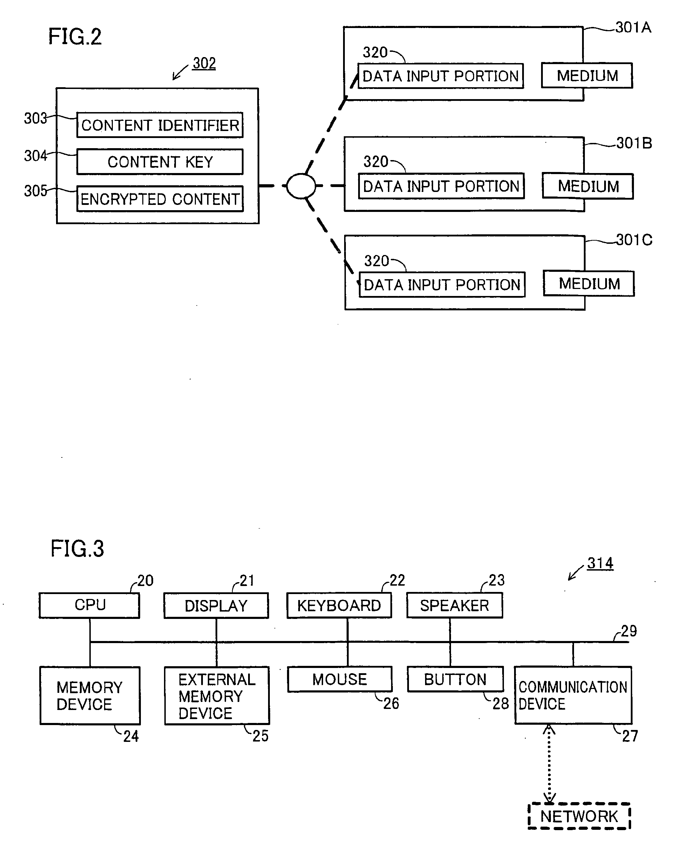

Note that while in Fig. 1A memory device 302 is provided internal to content recording apparatus 301, the former may not be arranged internal to the later. For example, such a configuration as shown in Fig. 2 may be adopted. More specifically, memory device 302 and a plurality of content recording apparatuses 301A-301C (herein representatively referred to as content recording apparatus 301) networked together may be included. In that case, memory device 302 can obtain via a network the data read from a medium by content recording apparatus 3 01 at a data input/output device 320. Furthermore, content stored in memory device 302 can be recorded via the network to the plurality of media in the plurality of content recording apparatuses 301via data input/output device 320. Thus only a single memory device 302 suffices to record content to a plurality of content recording apparatuses 301. Such a form as shown in Fig. 2 will also be referred to as a "content recording apparatus" including content recording apparatus 301 and memory device 302.

Reference will now be made to Fig. 1B to describe a configuration of content utilization apparatus 314 in the first embodiment.

With reference to the figure, content utilization apparatus 314 includes medium identifier reader 306, individualization key generator 307, a content key decrypter 315, a content decrypter 316, and a reproducer 317. Furthermore, content utilization apparatus 314 also includes an interface or a similar device (not shown) similar to that included in content recording apparatus 301, and connected to medium 310 to communicate data therewith. It should be noted, however, that more than one content utilization apparatus 314 that can read medium identifier 311 from a single medium 310 cannot concurrently exist. If more than one apparatus can exist in principle, and in practice, how attachment and detachment are done, the apparatuses' geometry, how they are used, and the like prevent more than one apparatus from concurrently existing for practical use, then more than one apparatus are considered to be unable to concurrently exist.

Medium identifier reader 306 and individualization key generator 307 included in content utilization apparatus 314 have a function similar to those included in content recording apparatus 301. More specifically, medium identifier reader 306 reads medium identifier 311 from medium 310 and passes it to individualization key generator 307.

Individualization key generator 307 uses medium identifier 310 received from medium identifier reader 306 and content identifier 303 read from medium 310 to generate an individualization key similar to that generated in content recording apparatus 301 from the same content of the same medium 301, and individualization key generator 307 passes the generated individualization key to content key decrypter 315.

Content key decrypter 315 employs the individualization key received from individualization key generator 307 to decrypt individualized content key 312 stored in medium 310 to generate a content key.

Note that "decryption" as referred to herein indicates a process employing a key to process encrypted, converted data to recover original, unconverted data. Processing encrypted data without using a key to recover original data is a significantly difficult conversion method. However, if an encryption system is determined, a decryption system is accordingly determined, and content utilization apparatus 314 decrypts encrypted data by employing a decryption processing method corresponding to an encryption processing method employed in content recording apparatus 301. Such decryption process may be effected by employing a decryption chip or similar hardware, or software.

Content key decrypter 315 then passes the generated content key to content decrypter 316.

Content decrypter 316 uses the content key received from content key decrypter 315 to decrypt encrypted content 305 stored in medium 310. The content is decrypted by a decryption method corresponding to an encryption method employed when content recording apparatus 301 stores the content to memory device 302. Note that the decryption method may be the same as or different from the above described method employed when content key decrypter 315 decrypts a content key. Content decrypter 316 passes decrypted encrypted content 305 to reproducer 317.

Reproducer 317 receives the decrypted content from content decrypter 316 and processes the content by a method determined for the content. More specifically, if the content is music data, it is audibly reproduced through a speaker 23 (see Fig. 3). If the content is image data, then a display 21 (see Fig. 3) displays an image.

Fig. 3 is a block diagram showing a specific example of a hardware configuration allowing the Fig. 1B content utilization apparatus 314 components 306-317 to function.

With reference to the figure, content utilization apparatus 314 includes a central processing unit (CPU) 20, a display 21, a keyboard 22, a speaker 23, a memory device 24, an external memory device 25, a mouse 26, a button 28 and a communication device 27 connected by a bus 29, and CPU 20 generally controls the apparatus.

CPU 20 executes a program stored for example in memory device 24, external memory device 25, or the like networked via communication device 27. CPU 20 obtains a program stored for example in memory device 24 and communicates data through bus 29 with mutually connected display 21, keyboard 22, speaker 23, memory device 24, external memory device 25, mouse 26, communication device 27 and button 28 to control them. Note that CPU 20 and other components may communicate data not only through bus 29 but also a communication cable, a wireless communication device or the like capable of transmitting and receiving data.

Display 21 is typically implemented in combination for example with a graphic chip, a video random access memory (VRAM) or the like. More specifically, data on the VRAM is converted to a display signal, which is in turn displayed on display 21 as an image.

Keyboard 22, mouse 26 and button 28 are means employed by a user to input instructions. More specifically, keyboard 22 is configured including a mechanical or electronic switch or the like detecting a pressed key. Mouse 26 is configured including a mechanical or electronic switch or the like detecting how a mouse button is pressed, and a mechanical or electronic sensor detecting the mouse's vertical and lateral, relative movement in distance. Button 28 is configured including a mechanical or electronic switch or the like. These input means are employed by a user to input an instruction, which is passed as an instruction signal on bus 29 to CPU 20. Note that the input means included in content utilization apparatus 314 is not limited to such means as described above and may be a variety of other manipulable equipment or an audio input through a microphone.

Memory device 24 typically includes dynamic random access memory (DRAM) flash memory, or a similar memory device. Note that memory, register and the like included in CPU 20 may be adapted to be included in memory device 24.

External memory device 25 is a hard disk drive (HDD), a personal computer (PC) card or similar detachably attachable storage means. Alternatively, external memory device 25 can also be a memory device, an external memory device or the like attached to another network equipment connected to CPU 20 on a network by wire or wireless.

Communication device 27 is implemented for example by a network interface card and communicates data with another network equipment connected by wire, wireless or the like.

Speaker 23 receives audio data transmitted for example on bus 29 and interprets the data as an audio signal and outputs it audibly. The output sound can be simple sound of a single wavelength or can be music, human voice, or similar complicated sound. If the output sound is predetermined, data that is transmitted may not be an audio signal; it may be only a simple on/off operation control signal.

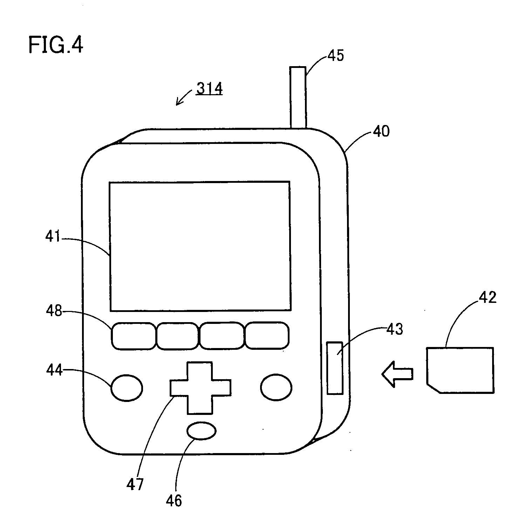

The above described data utilization apparatus 314 has an external appearance in a specific example, as shown in Fig. 4. While Fig. 4 shows a specific example of an external appearance of data utilization apparatus 314 in the form of a mobile terminal, data utilization apparatus 314 is not limited in form to that shown in Fig. 4 and may be any form of apparatus that can utilize data, such as a computer, dedicated reproduction equipment, a game machine, a mobile phone, personal digital assistants (PDA), or the like.

With reference to Fig. 4, data utilization apparatus 314 includes a main body 40 having a front side provided with an indicator 41, a speaker 44 and a microphone 46, and a plurality of buttons 47, 48 used to perform a variety of operations. Furthermore, main body 40 has an upper portion provided with an antenna 45. Main body 40 also has a side surface provided with a memory card slot 43 receiving a memory card 42.

Indicator 41 corresponds in function to reproducer 317 and the like shown in Fig. 1B, and in hardware to display 21 and the like shown in Fig. 3. Indicator 41 displays a user interface screen corresponding to a user operation or a utilization screen of content utilized (e.g., a video image, an image) and the like.

Memory card 42 corresponds to medium 310 or the like shown in Fig. 1, and in hardware to external memory device 25 or the like shown in Fig. 3.

Speaker 44 corresponds in function to reproducer 317 or the like shown in Fig. 1B for music data, and in hardware to speaker 23 or the like shown in Fig. 3.

Microphone 46 is a function typically used when data utilization apparatus 314 is a mobile phone and its telephone function is utilized, although not shown in Fig. 1B or 3. Furthermore, in some cases, it may also serve as a portion of a means for utilizing recorded data as a means for inputting an instruction of an operation. For example it is when data utilization apparatus 314 has an audio recognition means incorporated therein and is used for example to issue instructions in playing a game.

Antenna 45 corresponds in hardware to communication device 27 or the like shown in Fig. 3. While Fig. 4 shows that data utilization apparatus 314 provides wireless communication with a communication device partially implemented by an antenna, data utilization apparatus 314 may perform communications by wire.

The variety of buttons 47, 48 correspond in hardware to mouse 26, button 28, keyboard 22 or the like shown in Fig. 3. Depending on content displayed by indicator 41, button 27 or the like can be operated to enter various instructions. For example, a menu screen can be displayed and button 47 in the form of a 4-direction key can be used to select a menu or perform a similar operation. For example, other than buttons 47 and 48, the means for inputting instructions may also include a joy stick, a jog dial, a tablet and a variety of input devices.

Note that data utilization apparatus 314 is not limited to a dedicated apparatus and may be a general purpose apparatus also achieving another object for example such that a program of a method of utilizing content runs on a typical personal computer, a typical mobile phone and the like.

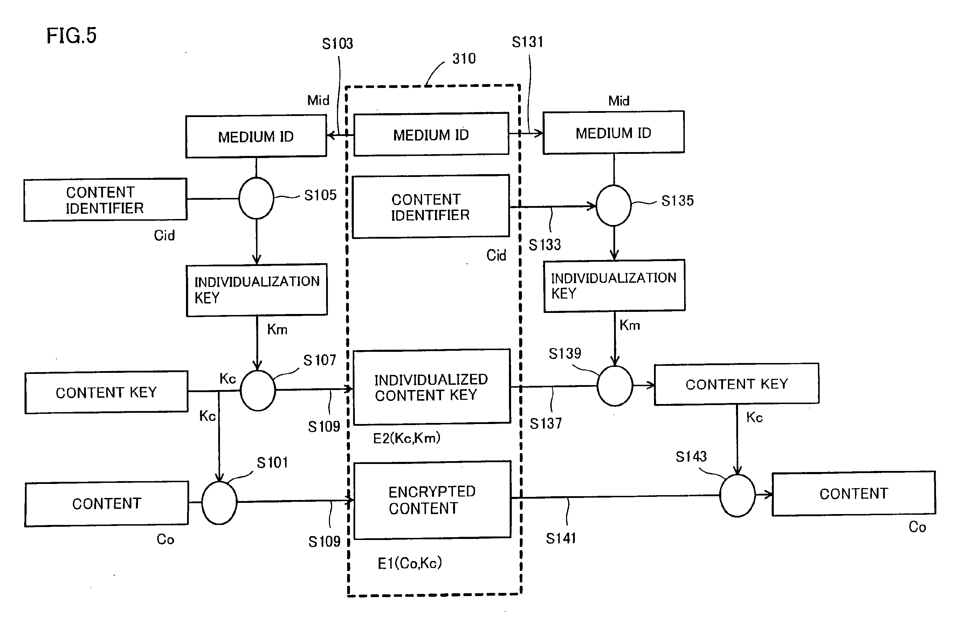

In the first embodiment, when content recording apparatus 301 and content utilization apparatus 314 effect encryption and decryption processes data flows as described hereinafter with reference to Fig. 5. In the figure, an arrow indicates how data flows, and a circle indicates that the data is processed.

Initially a content distributor employs content recording apparatus 301 to record encrypted content to medium 310 in a process as described hereinafter. This process is an encryption process indicated in Fig. 5 on a left hand.

With reference to Fig. 5, initially the content distributor stores in content recording apparatus 301 at memory device 302 content Co to be distributed. In doing so, to protect content Co, content Co is encrypted with content key Kc to generate encrypted content E1 (Co, Kc) (S101) representing a result of encrypting content Co by using content key Kc as a key in an encryption system E1. Content Co may be encrypted in content recording apparatus 301 at an encryption processor (not shown) or may be encrypted in a different encryption device to provide encrypted content E1 (Co, Kc) which is in turn input to content recording apparatus 301. Memory device 302 stores encrypted content E1 (Co, Kc).

Then the content recording apparatus 301 medium identifier reader 306 obtains a medium identifier Mid, an ID unique to medium 310 to which encrypted content E1 (Co, Kc) is to be recorded (S103).

Furthermore, the content recording apparatus 301 individualization key generator 307 employs a content identifier Cid stored in memory device 302 and medium identifier Mid obtained by medium identifier reader 306 from medium 310 to calculate an individualization key Km (S105) by a predetermined method allowing individualization key Km to be uniquely determined if content and medium identifiers Cid and Mid are determined. The method is also a method allowing individualization key Km to vary in value when content and medium identifiers Cid and Mid vary in value, and is a method of calculation preventing content and medium identifiers Cid and Mid from being readily estimated from individualization key Km. For example, content identifier Cid may be encrypted by using medium identifier Mid as a key.

Then content key encryption processor 308 employs individualization key Km to encrypt content key Kc employed in creating encrypted content to calculate an individualized content key E2 (Kc, Km) (S107). An encryption system E2 employed herein may be the same as or different from the method of encryption system E1 as described above.

Then recorder 309 stores content identifier Cid, encrypted content E1 (Co, Kc) and individualized content key E2 (Kc, Km) to medium 310 (S109).

When a user having purchased medium 310 connects medium 310 to content utilization apparatus 314 to reproduce content recorded in the medium in a process as described hereinafter. This process is a decryption process indicated in Fig. 5 at a right hand.

Initially the content utilization apparatus 314 medium identifier acquirer 306 obtains medium identifier Mid of the connected medium 310 (S131).

Furthermore the content utilization apparatus 314 individualization key generator 307 obtains content identifier Cid stored in medium 310 (S133) and employs medium identifier Mid obtained by medium identifier acquirer 306 and content identifier Cid to generate individualization key Km (S135). The process performed herein is a process identical to that performed in content recording apparatus 301 at individualization key generator 307 and identical medium and content identifiers Mid and Cid generate an identical individualization key Km.

Then content key decrypter 315 obtains individualized content key E2 (Kc, Km) from medium 310 (S137) and employs individualization key Km generated by individualization key generator 307 as a key for decryption to obtain content key Kc (S139). Content key decrypter 315 performs a decryption process converting an encryption process for recovery, and when the same key as used in the encryption process is used content key Kc can correctly be obtained and when a key different from that used in the encryption process is used a different result is obtained and content key Kc cannot be obtained.

Then content key decryption processor 316 obtains encrypted content E1 (Co, Kc) from medium 310 (S141) and employs content key Kc obtained at content key decrypter 315 by decryption to decrypt the encrypted content to obtain content Co (S143). As content Co decrypted in content decryption processor 316 is obtained, reproducer 317 can process and reproduce content Co.

Thus in the first embodiment content recording apparatus 301 and content utilization apparatus 314 effect encryption and decryption processes as described above. If data stored in medium 310 is copied to a medium 310b and medium 310b is connected to content utilization apparatus 314 to reproduce content copied in medium 310b, medium 310b has a medium identifier different from medium identifier 311 unique to medium 310, and the content utilization apparatus 314 individualization key generator 307 will generate an individualization key having a value Km2 different from individualization key Km employed when content recording apparatus 301 effects encryption process. Furthermore, if individualization key Km2 generated from the medium identifier of medium 310b is employed to decrypt individualized content key 312 copied in medium 310b, content key Kc employed when content recording apparatus 301 effects the encryption process cannot be obtained. As such, if medium 310b having copied the data stored in medium 310 is connected to content utilization apparatus 314, content utilization apparatus 314 cannot obtain content Co stored in medium 310.

Thus in the present embodiment content recording apparatus 301 employs an identifier unique to a medium to encrypt a content key so that in the present embodiment content utilization apparatus 314 without the medium connected thereto cannot correctly decrypt content, thus preventing use of content improperly copied to a different medium.

### Second Embodiment

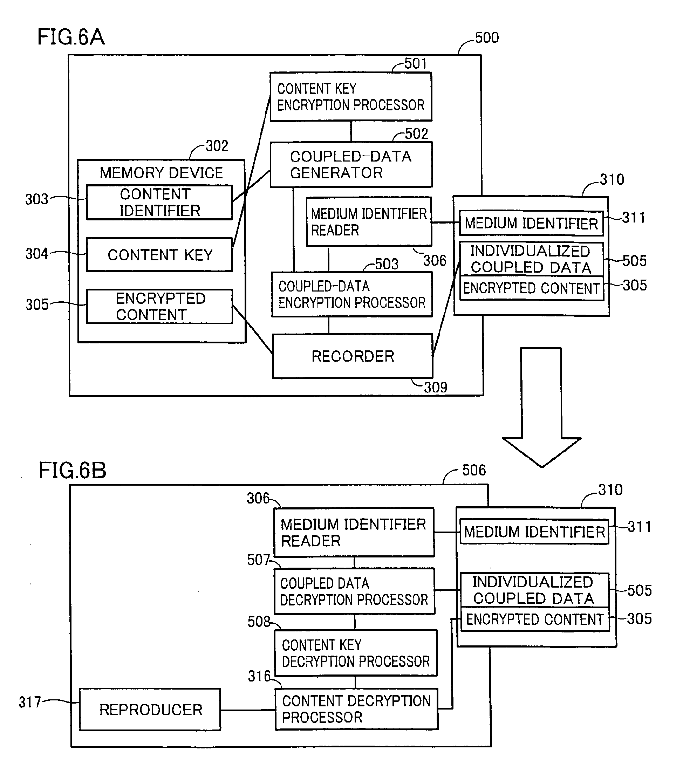

Figs. 6A and 6B are block diagrams showing a specific example of configurations of a content recording apparatus 500 and a content utilization apparatus 506, respectively, in a second embodiment of the present invention.

Initially with reference to Fig. 6A the second embodiment provides content recording apparatus 500 configured as will be described hereinafter in detail. With reference to Fig. 6A, content recording apparatus 500 includes a memory device 302, a content key encryption processor 501, a coupled-data generator 502, a medium identifier reader 306, a coupled-data encryption processor 503, and a recorder 309.

Memory device 302 is identical to that provided in the first embodiment, as shown in Fig. 1A, and has stored therein a content identifier 303 employed to identify content, a content key 304, and encrypted content 305 as a set. Furthermore, as has been described in the first embodiment, memory device 302 may not necessarily be internal to content recording apparatus 500 and instead externally be provided and connected to content recording apparatus 500 and content recording apparatus 500 may obtain data through a network from external memory device 302.

Furthermore, of components of content recording apparatus 500 in the second embodiment as shown in Fig. 6A, medium identifier reader 306 and recorder 309, components having the same reference characters as those of content recording apparatus 301 in the first embodiment shown in Fig. 1A, are similar to components included in content recording apparatus 301 previously described.

Content key encryption processor 501 encrypts content key 304 by using as a key a value calculated from content identifier 303. Content key encryption processor 501 may provide encryption in any system as long as a method of the encryption as has been described in the first embodiment is employed..More specifically, it may be a method employing content identifier 303 exactly as a key, or a method employing as a key a result calculated from content identifier 303 in a prescribed method. Content key encryption processor 501 passes the encrypted content key 304 to coupled-data generator 502.

Coupled-data generator 502 employs the encrypted content key received from content key encryption processor 501 and content identifier 303 stored in memory device 302 to calculate and generate coupled data.

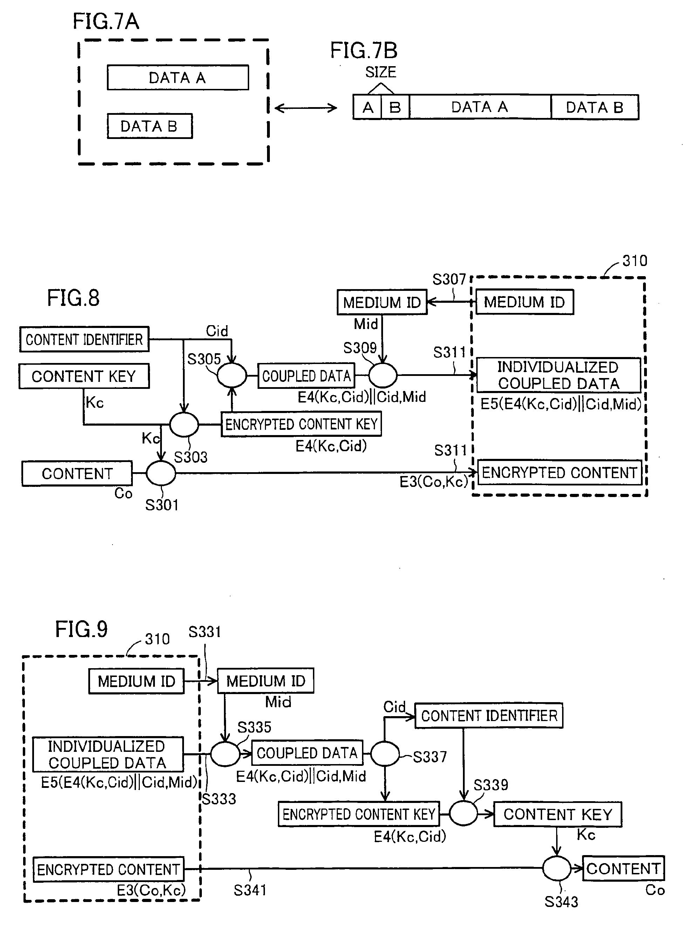

Coupled data generated in coupled-data generator 502 is two pieces of data having been converted in a prescribed operation method into single data and furthermore there exists a method of converting the coupled data back to the original two pieces of data, as will specifically be described by way of example with reference to Figs. 7A and 7B.

Fig. 7A indicates data A and data B, which are data before they are coupled together. Data A and data B are converted in a prescribed operation method into single data to be coupled data. This coupled data may for example be provided in the form of data having a top portion with data A and B's respective data sizes added thereto in a fixed data length followed by data A and B, as shown in Fig. 7B.

If the coupled data is data as shown in Fig. 7B, the data size can be extracted from the coupled data and used to separate the coupled data into data A and B. It should be noted, however, that this is merely one example and the coupled data may be in any form of data reversibly converted and capable of recovering original data.

Coupled-data generator 502 passes the generated coupled data to coupled-data encryption processor 503.

Coupled-data encryption processor 503 receives and encrypts the coupled data by using as a key medium identifier 311 of medium 310 received from medium identifier reader 306 to calculate individualized coupled data 505 indicating coupled data having been encrypted by using medium identifier 311 as a key.

Coupled-data generator 502 generates coupled data, which is data generated from a content key and a content identifier and accordingly has a data size smaller than that of content. As such, coupled data is encrypted in a shorter period of time than content. Coupled data encryption processor 503 passes the calculated individualized coupled data 505 to recorder 309.

Recorder 309 records to medium 310 individualized coupled data 505 received from coupled data encryption processor 503 and encrypted content stored in memory device 302. Note that as provided herein, recorder 309 may add the individualized coupled data to the encrypted content and thus record them.

Reference will now be made to Fig. 6B to describe a configuration of content utilization apparatus 506 in the second embodiment.

With reference to Fig. 6B, content utilization apparatus 506 includes medium identifier reader 306, a coupled-data decryption processor 507, a content key decrypter 508, content decryption processor 316, and reproducer 317. Note that medium identifier reader 306 is identical to that described in the first embodiment and shown in Fig. 1B and obtains medium identifier 311 of medium 310 connected. Furthermore, of content utilization apparatus 506 described in the second embodiment and shown in Fig. 6, content decryption processor 316 and reproducer 317, components having the same reference numerals as those of content utilization apparatus 314 described in the first embodiment and shown in Fig. 1B, are similar to components included in content utilization apparatus 314 previously described.

Coupled-data decryption processor 507 obtains individualized coupled data 505 from medium 310 and employs medium identifier 311 obtained by medium identifier reader 306 from medium 310 to decrypt the data to generate coupled data. Coupled-data decryption processor 507 provides decryption by employing a method corresponding to the encryption system of the encryption process performed in content recording apparatus 500 by coupled-data encryption processor 503. Coupled-data decryption processor 507 passes the decrypted, generated coupled data to content key decrypter 508.

Content key decrypter 508 separates an encrypted content key and content identifier 303 from the coupled data received from coupled-data decryption processor 507 and decrypts the encrypted content key by using content identifier 303 as a key to obtain content key 304, and passes the obtained content key 304 to content decryption processor 316.

Content decryption processor 316 reads encrypted content 305 from medium 310 and employs content key 304 received from content key decrypter 508 to decrypt encrypted content 305, and passes the decrypted content to reproducer 317.

Reproducer 317 receives and reproduces the decrypted content received from content decryption processor 316. If content decryption processor 316 can accurately decrypt content, reproducer 317 can accurately reproduce the content.

In the second embodiment when content recording apparatus 500 and content utilization apparatus 506 effect encryption and decryption processes, data flows as will be described with reference to Figs. 8 and 9. In the figures, an arrow indicates how data flows and a circle indicates that data is processed.

Initially when a content distributor employs content recording apparatus 500 to record encrypted content to medium 310 in a process as described hereinafter. Note that this process is the Fig. 8 encryption process.

With reference to Fig. 8, the content distributor initially stores in content recording apparatus 500 at memory device 302 content Co to be distributed. In doing so, to protect content Co, content Co is encrypted with content key Kc to generate encrypted content E3 (Co, Kc) (S301). Memory device 302 stores encrypted content E3 (Co, Kc). This encryption system E3 may be identical to encryption system E1 described in the first embodiment.

Content key encryption processor 501 encrypts content key Kc by content identifier Cid to generate an encrypted content key E4 (Kc, Cid) (S303).

Coupled-data generator 502 then couples content identifier Cid and encrypted content key E4 (Kc, Cid) together to calculate coupled data E4 (Kc, Cid) | | Cid (S305), wherein the symbol "||" indicates a coupling process.

Medium identifier reader 306 then obtains medium identifier Mid, an ID unique to medium 310 (S307).

Coupled-data encryption processor 503 then encrypts coupled data E4 (Kc, Cid) | | Cid by medium identifier Mid to generate individualized coupled data E5 (E4 (Kc, Cid) | | Cid, Mid) (S309).

Recorder 309 then stores individualized coupled data E5 (E4 (Kc, Cid) | | Cid, Mid) and encrypted content E3 (Co, Kc) to medium 310 (S311).

When a user having purchased medium 310 connects medium 310 to content utilization apparatus 506 to reproduce content recorded in the medium in a process as described hereinafter. This process is a decryption process indicated in Fig. 9.

With reference to Fig. 9 initially the content utilization apparatus 506 medium identifier acquirer 306 obtains medium identifier Mid of the connected medium 310 (S331).

Furthermore, coupled-data decryption processor 507 obtains individualized coupled data E5 (E4 (Kc, Cid) | | Cid, Mid) stored in medium 310 (S333) and employs medium identifier Mid obtained by medium identifier acquirer 306 to decrypt the data to obtain coupled data E4 (Kc, Cid) | | Cid (S335).

Content key decrypter 508 then separates coupled data E4 (Kc, Cid) | | Cid into each data to obtain encrypted content key E4 (Kc, Cid) and content identifier Cid (S337), and decrypts encrypted content key E4 (Kc, Cid) by using content identifier Cid as a key to obtain content key Kc (S339).

Then content key decryption processor 316 obtains encrypted content E3 (Co, Kc) from medium 310 (S341) and employs content key Kc obtained at content key decrypter 508 by decryption to decrypt the encrypted content to obtain content Co (S343). As content Co decrypted in content decryption processor 316 is obtained, reproducer 317 can process and reproduce content Co.

Thus in the second embodiment content recording apparatus 500 and content utilization apparatus 506 effect encryption and decryption processes as described above. If data stored in medium 310 is copied to a different medium 310b and medium 310b is connected to content utilization apparatus 506 to reproduce content copied in medium 310b, medium 310b has a medium identifier different from medium identifier 311 unique to medium 310, and coupled data generated by coupled data decryption processor 507 from individualized coupled data copied in medium 310b will be E4 (Kc, Cid) | | Cid2 different from coupled data E4 (Kc, Cid) | | Cid generated in content recording apparatus 500 at coupled-data generator 502. Furthermore, if data E4 (Kc, Cid) | | Cid2 generated from the medium identifier of media 310b has an encrypted content key and a content identifier separated therefrom, encrypted content key E4 (Kc, Cid) obtained from content key Kc used in content recording apparatus 301 to perform encryption process or correct content identifier Cid cannot be obtained. As such, if content key decrypter 508 employs these to generate a content key, content key Kc employed in content recording apparatus 301 to perform the encryption process cannot be generated and if different medium 310b having copied the data stored in medium 310 is connected to content utilization apparatus 314 content utilization apparatus 3 14 cannot obtain content Co stored in medium 310.

Thus the present content recording apparatus can employ a medium's identifier to encrypt and record content to the medium in a reduced period of time. Furthermore, the present content utilization apparatus cannot reproduce encrypted content recorded in a recording medium and copied to a different recording medium of a different memory device or the like as the original medium's identifier employed to encrypt the content cannot correctly be obtained. This can prevent content from being improperly copied to a different medium and improperly used. Simultaneously, an authorized user can still conveniently carry a medium and reproduce in a plurality of content utilization apparatuses the content recorded in the medium.

Furthermore the present content recording apparatus can employ a different key for each content for individualization so that if a plurality of different contents are to be recorded to a single medium and that medium's medium identifier is leaked, the recorded contents can still be protected and thus have increased reliability.

Note that the above described content recording apparatus and content utilization apparatus can also perform encryption and decryption method provided in the form of a program. Such program can be recorded in a flexible disk, a CD-ROM, ROM, random access memory (RAM), a memory card or a similar recording medium included with and readable by a computer, and provided in the form of a program product. Alternatively, the program may be recorded in a recording medium such as a hard disk incorporated in a computer, and thus provided. Furthermore, the program may be downloaded via a network.

The program product provided is installed in a hard disk or similar program storage and thus executed. Note that the program product includes the program itself and a recording medium having the program recorded therein.

Although the present invention has been described and illustrated in detail, it is clearly understood that the same is by way of illustration and example only and is not to be taken by way of limitation, the spirit and scope of the present invention being limited only by the terms of the appended claims.

### Industrial Applicability

Thus the present invention capable of preventing improper use of contents is advantageously applicable to content recording apparatuses, content utilization apparatuses, content recording methods, content utilization methods, content recording program products, and content utilizing program products.

## Claims

1. A content recording apparatus comprising:
an identifier acquirer (306) obtaining from a storage medium (301) an unrewritable identifier (311) unique to said storage medium (301);
an individualization key generator (307) generating an individualization key from said identifier (311) unique to said storage medium (301) and a content identifier (303) unique to content;
an encrypted-content key generator (308) employing said individualization key to encrypt a content key (304) to generate an encrypted content key (312), said content key (304) having been used to encrypt said content; and
a data recorder (309) recording content (305) at least partially encrypted with said content key (304), said content identifier (303), and said content key (312) to said storage medium (301).

2. The content recording apparatus to claim 1, further comprising a storage (302) storing said content identifier, said storage (302) storing said content identifier (303) present in said content at a region other than that encrypted with said content key (304).

3. A content recording apparatus comprising:
an encrypted-content key generator (501) encrypting a content key (304), having been used to encrypt content, by a content identifier (303) unique to said content to generate an encrypted content key;
a data coupler (502) coupling said encrypted content key and said content identifier (303) together to generate coupled data;
an identifier acquirer (306) obtaining from a storage medium (310) an unrewritable identifier (311) unique to said storage medium (310); and
an encrypted, coupled data generator (503) encrypting said coupled data by said identifier (311) unique to said storage medium (310).

4. A content utilization apparatus comprising:
a data acquirer (307, 315, 316) obtaining from a storage medium (310) encrypted content (305) recorded in said storage medium (310), a content identifier (303) unique said content, and a content key (312) employed to encrypt said content and encrypted;
an identifier acquirer (306) obtaining from said storage medium (310) an unrewritable identifier (311) unique to said storage medium (310);
an individualization key generator (307) generating an individualization key from said identifier (311) unique to said storage medium (310) and said content identifier (303);
an encrypted-content key decrypter (315) decrypting said encrypted content key (312) with said individualization key; and
a content decrypter (316) decrypting said encrypted content (305) with said content key decrypted.

5. The content utilization apparatus according to claim 4, wherein said data acquirer (307, 315, 316) obtains said content identifier (303) present in said encrypted content (305) recorded in said storage medium (310) at a region other than that encrypted with said content key.

6. A content utilization apparatus comprising:
a data acquirer (316, 507) obtaining from a storage medium (310) encrypted content (305) recorded in said storage medium (310) and encrypted coupled data (505) formed of a content key having been used to encrypt said content and encrypted and a content identifier unique to said content;
an identifier acquirer (306) obtaining from said storage medium (310) an unrewritable identifier (311) unique to said storage medium (310);
a coupled-data acquirer (507) employing said identifier (311) unique to said storage medium (310) to decrypt said encrypted coupled data (505) to generate coupled data;
a data separator (508) obtaining said content key encrypted and said content identifier from said coupled data generated;
an encrypted-content key decrypter (508) decrypting said encrypted content key by said content identifier; and
a content decrypter (316) employing said decrypted content key to decrypt said encrypted content (305).

7. A method of recording content to a storage medium (310) having an unrewritable, unique identifier, comprising the steps of:
obtaining said identifier from said storage medium (310) (S103);
generating an individualization key from said identifier unique to said storage medium (310) and a content identifier unique to said content (S105);
encrypting a content key, having been used to encrypt said content, with said individualization key to generate an encrypted content key (S107); and
recording to said storage medium (310) content at least partially encrypted with said content key, said content identifier, and said encrypted content key (S109).

8. A method of recording content to a storage medium (310) having an unrewritable, unique identifier, comprising the steps of:
encrypting a content key, having been used to encrypt said content, by a content identifier unique to said content to generate an encrypted content key (S303);
coupling said encrypted content key and said content identifier together to generate coupled data (S305);
obtaining an identifier unique to said storage medium (301) from said storage medium (301) (S307); and
encrypting said coupled data by said identifier unique to said storage medium (301) (S309).

9. A method of utilizing content recorded in a storage medium (310) having an unrewritable, unique identifier, comprising the steps of:
obtaining from said storage medium (310) encrypted content recorded in said storage medium (310), a content identifier unique said content, and a content key employed to encrypt said content and encrypted (S133, S137, S141);
obtaining an identifier unique to said storage medium (310) from said storage medium (310) (S131);
generating an individualization key from said identifier unique to said storage medium (310) and said content identifier (S135);
decrypting said encrypted content key with said individualization key (S139); and
decrypting said encrypted content with said content key decrypted (S143).

10. A method of utilizing content recorded in a storage medium (301) having an unrewritable, unique identifier, comprising the steps of:
obtaining from a storage medium (301) encrypted content recorded in said storage medium (310) and encrypted coupled data formed of a content key having been used to encrypt said content and encrypted and a content identifier unique to said content (S333, S341);
obtaining an identifier unique to said storage medium (310) from said storage medium (301) (S331);
employing said identifier unique to said storage medium (310) to decrypt said encrypted coupled data to generate coupled data (S335);
obtaining said content key encrypted and said content identifier from said coupled data generated (S337);
decrypting said encrypted content key by said content identifier (S339); and
employing said decrypted content key to decrypt said encrypted content (S343).

11. A program product causing a computer to execute a method of recording content to a storage medium (310) having an unrewritable, unique identifier, said method including the steps of:
obtaining said identifier from said storage medium (310) (S103);
generating an individualization key from said identifier unique to said storage medium (310) and a content identifier unique to said content (S105);
encrypting a content key, having been used to encrypt said content, with said individualization key to generate an encrypted content key (S107); and
recording to said storage medium (310) content at least partially encrypted with said content key, said content identifier, and said encrypted content key (S109).

12. A program product causing a computer to execute a method of recording content to a storage medium (310) having an unrewritable, unique identifier, said method including the steps of:
encrypting a content key, having been used to encrypt said content, by a content identifier unique to said content to generate an encrypted content key (S303);
coupling said encrypted content key and said content identifier together to generate coupled data (S305);
obtaining an identifier unique to said storage medium (301) from said storage medium (301) (S307); and
encrypting said coupled data by said identifier unique to said storage medium (301) (S309).

13. A program product causing a computer to execute a method of recording content to a storage medium (310) having an unrewritable, unique identifier, said method including the steps of:
obtaining from said storage medium (310) encrypted content recorded in said storage medium (310), a content identifier unique said content, and a content key employed to encrypt said content and encrypted (S133, S137, S141);
obtaining an identifier unique to said storage medium (310) from said storage medium (310) (S131);
generating an individualization key from said identifier unique to said storage medium (310) and said content identifier (S135);
decrypting said encrypted content key with said individualization key (S139); and
decrypting said encrypted content with said content key decrypted (S143).

14. A program product causing a computer to execute a method of recording content to a storage medium (301) having an unrewritable, unique identifier, said method including the steps of:
obtaining from a storage medium (301) encrypted content recorded in said storage medium (310) and encrypted coupled data formed of a content key having been used to encrypt said content and encrypted and a content identifier unique to said content (S333, S341);
obtaining an identifier unique to said storage medium (310) from said storage medium (301) (S331);
employing said identifier unique to said storage medium (310) to decrypt said encrypted coupled data to generate coupled data (S335);
obtaining said content key encrypted and said content identifier from said coupled data generated (S337);
decrypting said encrypted content key by said content identifier (S339); and
employing said decrypted content key to decrypt said encrypted content (S343).
